# EUROPÄISCHE PATENTSCHRIFT

(11) **EP 3 829 937 B1**
(45) Veröffentlichungstag und Bekanntmachung des Hinweises auf die Patenterteilung: **13.03.2024**
(21) Anmeldenummer: 19729524.9
(22) Anmeldetag: 06.06.2019
(51) Int. Cl.: B60S 1/04, B60S 1/38, B60S 1/40

(54) **ADAPTEREINHEIT**
ADAPTER UNIT
ENSEMBLE ADAPTATEUR

(30) Priorität: 30.07.2018 DE 102018212667
(43) Veröffentlichungstag der Anmeldung: 09.06.2021
(60) Teilanmeldung: 23187289.6
(73) Patentinhaber: Robert Bosch GmbH, 70442 Stuttgart (DE)
(72) Erfinder: KRAEMER, Godelieve, 76549 Huegelsheim (DE); BUBBA, Marcello, 3210 Linden (BE); BRATEC, Herve, 3012 WILSELE (BE); KRUSE, Michael, 76547 Sinzheim (DE); DEPONDT, Helmut, 3370 Boutersem (BE); TRUYENS, Stijn, 3300 Tienen (BE)
(86) Internationale Anmeldenummer: PCT/EP2019/064841
(87) Internationale Veröffentlichungsnummer: WO 2020/025199

(56) Entgegenhaltungen:
- EP-A1- 2 974 919
- DE-A1-102016 204 243
- DE-A1-102016 211 162
- FR-A1- 3 044 618
- US-A1- 2015 096 142

## Beschreibung

Die Erfindung betrifft eine Adaptereinheit, die zu einer Kopplung, insbesondere lösbaren Kopplung eines Wischblatts mit einem Wischarm vorgesehen ist, aufweisend eine Windabweiserfläche, welche dazu eingerichtet ist, eine anströmende Luft abzuweisen und das Wischblatt an eine Fahrzeugscheibe zu drücken.

### Stand der Technik

Es sind bereits Wischvorrichtungen umfassend einen Wischarm und ein Wischblatt sowie eine Adaptereinheit zur lösbaren Kopplung eines Wischarms mit einem Wischblatt vorgeschlagen worden. Solche Wischvorrichtungen haben den Nachteil, dass der Wischarm stets eine hohe Anpresskraft zum Andrücken des Wischblatts an eine Fahrzeugscheibe aufbringen muss, um eine ausreichende Wischleistung zu gewährleisten. Eine Adaptereinheit mit den Merkmalen des Oberbegriffs ist beispielsweise aus der DE 10 2016 211 162 A1 bekannt.

### Offenbarung der Erfindung

### Vorteile

Die vorliegende Erfindung beschreibt eine Adaptereinheit, die zu einer Kopplung, insbesondere lösbaren Kopplung eines Wischblatts mit einem Wischarm vorgesehen ist, aufweisend eine Windabweiserfläche, welche dazu eingerichtet ist, eine anströmende Luft abzuweisen und das Wischblatt an eine Fahrzeugscheibe zu drücken, und aufweisend ein Schwenklager, welches dazu eingerichtet ist, den Wischarm gegenüber dem Wischblatt schwenkbar zu lagern, wobei das Schwenklager wenigstens zwei weitgehend vertikal auf einer Adaptergrundfläche angeordnete Säulen aufweist, wobei jede der Säulen jeweils einen Gelenkbolzen aufweist, welcher parallel oder weitgehend parallel zu einer Lagerachse ausgerichtet ist und zur Lagerung des Wischarms und/oder einer Wischarmadaptereinheit vorgesehen ist, dadurch gekennzeichnet, dass eine windzugewandte Säule der wenigstens zwei Säulen eine geringere Höhe hat als eine windabgewandte Säule der wenigstens zwei Säulen, insbesondere, dass eine Höhe der wenigstens zwei Säulen einem Höhenverlauf der Windabweiserfläche entspricht.

Das hat den Vorteil, dass durch die Höhen der windzugewandten Säule und der windabgewandten Säule die Windabweiserfläche so positioniert werden kann, dass sie bei schneller Fahrt aufgrund des sie anströmenden Fahrtwinds das Wischblatt an die Fahrzeugscheibe presst. Das erhöht eine Gesamtanpresskraft des Wischblatts an die Fahrzeugscheibe und verbessert die Wischleistung. Die benötigte Anpresskraft, mit welcher der Wischarm das Wischblatt an die Fahrzeugscheibe presst, wird auf diese Weise reduziert. Es kann ein günstigerer und/oder einfacherer und/oder zuverlässigerer und/oder kompakterer Wischarm mit einer geringeren Anpresskraft verwendet werden, insbesondere mit einer kleineren Feder zum Aufbringen der Anpresskraft. Weiterhin wird durch die Verwendung einer Windabweiserfläche gemäß der vorliegenden Erfindung verhindert, dass die Adaptereinheit bzw. eine Wischvorrichtung - umfassend die Adaptereinheit, das Wischblatt und den Wischarm - durch eine ungünstige Aerodynamik bei schneller Fahrt eine Kraft generiert, welche der benötigten Anpresskraft entgegengesetzt ist und so die Wischleistung verschlechtern würde oder sogar ein Wischen unmöglich machen würde. Durch die Adaptereinheit gemäß der vorliegenden Erfindung wird sichergestellt, dass aufgrund von aerodynamischen Effekten, insbesondere einem Wind, insbesondere Fahrtwind, eine resultierende Kraft das Wischblatt auf die Fahrzeugscheibe drückt. Dadurch, dass die erste Teilfläche und die zweite Teilfläche jeweils eine andere Geometrie und/oder eine andere Ausrichtung aufweisen, ist eine präzise Einstellung von Anpresskräften möglich, insbesondere einer Ausrichtung der Anpresskräfte.

Vorteilhaft ist die Adaptereinheit mit der Windabweiserfläche einstückig ausgebildet. Unter einstückig soll in diesem Zusammenhang insbesondere stoffschlüssig verbunden, wie beispielsweise durch einen Schweißprozess und/oder einen Klebeprozess usw. und besonders vorteilhaft angeformt verstanden werden, wie durch die Herstellung aus einem Guss und/oder durch die Herstellung in einem Ein- oder Mehrkomponentenspritzverfahren. Vorteilhaft ist die Adaptereinheit mit dem Schwenklager einstückig ausgebildet.

Die Adaptergrundfläche ist im einem am Fahrzeug montierten Zustand der Adaptereinheit bevorzugt parallel oder weitgehend parallel zur Fahrzeugscheibe ausgerichtet. Unter weitgehend parallel soll verstanden werden, dass eine erste Achse mit einer zweiten Achse einen Winkel einschließt, der nicht mehr als 8°, vorteilhaft nicht mehr als 5°, besonders vorteilhaft nicht mehr als 2° von 0° abweicht. Unter weitgehend senkrecht soll verstanden werden, dass eine erste Achse mit einer zweiten Achse einen Winkel einschließt, der nicht mehr als 8°, vorteilhaft nicht mehr als 5°, besonders vorteilhaft nicht mehr als 2° von 90° abweicht.

Vorteilhaft ist die Adaptereinheit mit der Adaptergrundfläche einstückig ausgebildet. Vorteilhaft ist die Adaptergrundfläche mit den wenigstens zwei Säulen einstückig ausgebildet ist. Vorteilhaft wenigstens eine der wenigstens zwei Säulen mit ihrem Gelenkbolzen einstückig ausgebildet.

Darunter, dass eine Säule vertikal auf der Adaptergrundfläche angeordnet ist, soll insbesondere verstanden werden, dass die Säule entlang ihrer Länge bzw. ihrer größten Längsausdehnung senkrecht zur Adaptergrundfläche angeordnet ist. Eine Höhe einer Säule wird bevorzugt senkrecht zur Adaptergrundfläche gemessen.

Vorteilhaft ist das Schwenklager so ausgebildet, dass die Lagerachse senkrecht oder weitgehend senkrecht zu einer Wischarmrichtung angeordnet ist. Unter einer Wischarmrichtung soll eine Richtung verstanden werden, welche in Richtung einer größten Längsausdehnung des an der Adaptereinheit montierten Wischarms angeordnet ist, insbesondere in einer Grundstellung. Im unmontierten Zustand ist die Wischarmrichtung die Richtung an der Adaptereinheit, in die ein montierter Wischarm zeigen würde, insbesondere in einer Grundstellung. Vorteilhaft ist die Lagerachse parallel oder weitgehend parallel zu einer vorgesehenen Wischrichtung angeordnet. Vorteilhaft ist die Lagerachse so angeordnet, dass sie in einem nicht wischenden Ruhezustand der an der Fahrzeugscheibe angebrachten Wischvorrichtung - umfassend die Wischarmadaptereinheit, das Wischblatt und den Wischarm - parallel oder weitgehend parallel zu einer Windanströmrichtung bzw. zur einer Fahrzeugfahrrichtung angeordnet ist. Im Folgenden soll unter einer Windanströmrichtung die Richtung verstanden werden, in der der Fahrtwind in einem nicht wischenden Ruhezustand der an der Fahrzeugscheibe angebrachten Wischvorrichtung anströmen würde. Besonders vorteilhaft liegt die Lagerachse in einem am Fahrzeug montierten Zustand parallel zur Fahrzeugscheibe, bevorzugt an jeder Position über eine Wischbewegung.

Durch die in den Unteransprüchen aufgeführten Merkmale sind vorteilhafte Weiterbildungen der Adaptereinheit möglich.

Schließt die Windabweiserfläche einen Hauptwinkel zwischen 25° und 65°, bevorzugt zwischen 40° und 50° mit der Lagerachse ein, werden gute aerodynamische Eigenschaften der Adaptereinheit mit einem ausreichend großem Baumraum der Adaptereinheit ermöglicht, insbesondere für eine Unterbringung des Schwenklagers.

Unter einen Hauptwinkel ist der Winkel zu verstehen, den die Windabweiserfläche zur Lagerachse aufweist. Vorteilhaft wird der Hauptwinkel um die Wischarmrichtung gemessen. Ein positiver Hauptwinkel zwischen 0° und 90° beschreibt dabei eine Windabweiserfläche, welche wenigstens teilweise zur Windanströmrichtung zugewendet ist. Je näher der Hauptwinkel an 90°, umso stärker ist die Windabweiserfläche der Windanströmrichtung zugewendet. Vorteilhaft wird der Hauptwinkel zwischen der Lagerachse und einer Projektion der Lagerachse auf die Windabweiserfläche aufgespannt, wobei die Projektion vorteilhaft entlang einer Projektionsebene durchgeführt wird, in welcher die Lagerachse liegt und welche senkrecht oder weitgehend senkrecht zur Wischarmrichtung angeordnet ist. Es ist auch möglich, dass die Projektionsebene durch die Lagerachse und einen Normalenvektor bzw. einen mittleren Normalenvektor der Windabweiserfläche aufgespannt wird. Bei einer gekrümmten bzw. nicht ebenen Windabweiserfläche ist es denkbar, dass der Hauptwinkel zwischen der Lagerachse und einer Tangentialebene aufgespannt ist, wobei die Tangentialebene in einem ausgezeichneten Punkt - beispielsweise dem Mittelpunkt - der Windabweiserfläche liegt oder die Tangentialebene eines mittleren Normalenvektors der Windabweiserfläche ist. Unter einem mittleren Normalenvektor ist ein Vektor zu verstehen, der das Mittel über alle oder fast alle Normalenvektoren der Windabweiserfläche darstellt.

Die Gelenkbolzen weisen auf einer der Adaptergrundfläche zugewandten Bolzenunterseite einen größeren Bolzenradius auf als an einer von der Adaptergrundfläche abgewandten Bolzenoberseite, was den Vorteil hat, dass der Wischarm besonders einfach befestigbar ist und gleichzeitig eine besonders zuverlässige Kopplung des Wischarms mit dem Schwenklager möglich macht, insbesondere bei hohen Kräften. Unter einem Bolzen soll ein in erster Näherung zylinderförmiges Element verstanden werden. Ein Bolzenradius ist der Radius einer kreisförmigen Grundfläche des zylinderförmigen Elements. Ein Bolzen, insbesondere ein Bolzen gemäß der vorliegenden Erfindung kann auch weitgehend aus mehreren Zylindersegmenten zusammengesetzt sein, insbesondere einstückig zusammengesetzt. Dann sind die unterschiedlichen Bolzenradien des einen Bolzens die Radien der unterschiedlichen Zylindersegmente, aus denen der Bolzen zusammengesetzt ist. Beispielsweise ist es denkbar, dass ein Bolzen aus zwei Halbzylindersegmenten zusammengesetzt ist, die jeweils einen Halbkreis als Grundfläche aufweisen und so angeordnet sind, dass die jeweiligen Mittelpunkte der Halbkreise bzw. Mittelachsen der Halbzylindersegmente aneinander liegen. Die Bolzenunterseite kann ein erstes Halbzylindersegment aufweisen und die Bolzenoberseite kann ein zweites Halbzylindersegment aufweisen. Es ist auch denkbar, dass der Bolzen durch ein zylinderförmiges Segment und ein auf das zylinderförmige Segment aufgesetztes Hohlzylindersegment - insbesondere ein halbes Hohlzylindersegment welches durch einen entlang einer Symmetrieachse halbierten Hohlzylinder gebildet wird, insbesondere mit einem inneren Radius welcher weitgehend einem Radius des zylinderförmigen Segments entspricht - und/oder ein Hohlkegelstumpfsegment - insbesondere ein halbes Hohlkegelstumpfsegment welches durch einen entlang einer Symmetrieachse halbierten Hohlkegelstumpf gebildet wird, insbesondere mit einem inneren Radius welcher weitgehend einem Radius des zylinderförmigen Segments entspricht -gebildet wird. Unter einem Hohlkegelstumpf soll ein Kegelstumpf verstanden werden, der eine zylinderförmige Bohrung entlang seiner Symmetrieachse aufweist. Bevorzugt weisen das Hohlzylindersegment und/oder das Hohlkegelstumpfsegment eine geringere Länge entlang ihrer Symmetrieachse auf als das zylinderförmige Element. Bevorzugt sind das Hohlzylindersegment und/oder das Hohlkegelstumpfsegment jeweils an der Säule angeordnet.

Weisen die wenigstens zwei Säulen eine Vielzahl von Rippen auf, welche zur Verfestigung der Säulen vorgesehen sind, wobei die Rippen bevorzugt jeweils auf einer dem Gelenkbolzen gegenüberliegenden Seite einer Säule angeordnet sind, wird die Stabilität der Säulen erhöht. Auf diese Weise wird die Zuverlässigkeit des Schwenklagers weiter erhöht. Die Rippen können entlang der Höhe der Säule bzw. senkrecht oder weitgehend senkrecht zur Adaptergrundfläche angeordnet sein. Auf diese Weise kann die Säule gegen ein Verkippen, insbesondere in Richtung ihres Bolzens, stabilisiert werden. Die Rippen können auch parallel oder weitgehend parallel zur Adaptergrundfläche ausgerichtet sein. Auf diese Weise kann die Säule gegen eine Torsion bzw. Verdrehung im eine Säulenlängsachse bzw. um ihre Höhe stabilisiert werden. Unter einer Vielzahl von Rippen sollen wenigstens zwei Rippen verstanden werden. Die Rippen der Vielzahl von Rippen können jeweils unterschiedlich ausgebildet sein, insbesondere eine unterschiedliche Geometrie und/oder Ausrichtung aufweisen. Bevorzugt ist die Säule mit der Vielzahl von Rippen einstückig ausgebildet.

Der Wischarm ist besonders sicher befestigbar, wenn die Gelenkbolzen der wenigstens zwei Säulen zueinander ausgerichtet sind. Insbesondere soll darunter, dass die Gelenkbolzen der wenigstens zwei Säulen zueinander ausgerichtet sind, verstanden werden, dass sich ein erster Gelenkbolzen einer ersten Säule aus der ersten Säule heraus in Richtung einer zweiten Säule erstreckt und sich ein zweiter Gelenkbolzen der zweiten Säule aus der zweiten Säule heraus in Richtung der ersten Säule erstreckt. Bevorzugt sind die Gelenkbolzen parallel oder weitgehend parallel zur Lagerachse ausgerichtet. Beispielsweise kann die erste Säule die windzugewandte Säule sein. Beispielsweise kann die zweite Säule die windabgewandte Säule sein.

In einer Variante ist es denkbar, dass die Gelenkbolzen voneinander weggerichtet sind. Insbesondere kann sich der erste Gelenkbolzen der ersten Säule aus der ersten Säule heraus in entgegengesetzter Richtung zu der zweiten Säule erstreckt und sich der zweite Gelenkbolzen der zweiten Säule aus der zweiten Säule heraus in entgegengesetzter Richtung zu der ersten Säule erstrecken. In weiteren Varianten ist es möglich, dass die Gelenkbolzen in eine gleiche Richtung ausgerichtet sind, insbesondere parallel oder weitgehend parallel zur Lagerachse. Beispielsweise ist es möglich, dass sich der erste Gelenkbolzen und der zweite Gelenkbolzen jeweils in eine Richtung erstrecken, die von der ersten Säule zur der zweiten Säule zeigt. Es ist auch möglich, dass sich der erste Gelenkbolzen und der zweite Gelenkbolzen jeweils in eine Richtung erstrecken, die von der zweiten Säule zur der ersten Säule zeigt. Insbesondere können die sich Gelenkbolzen in eine Windanströmrichtung erstrecken oder gegen eine Windanströmrichtung erstrecken.

Das Schwenklager wird weiter gegenüber unerwünschten Bewegungen, insbesondere elastischen Verformungen besonders stabil, wenn ein Gelenkbolzenabstand von einem ersten Gelenkbolzen zu einem zweiten Gelenkbolzen größer ist als eine Summe von einer ersten Gelenkbolzenlänge des ersten Gelenkbolzens und einer zweiten Gelenkbolzenlänge des zweiten Gelenkbolzens. Unter einem Gelenkbolzenabstand soll insbesondere ein Abstand zwischen dem ersten Gelenkbolzen und dem zweiten Gelenkbolzen entlang der Lagerachse verstanden werden. Unter einer Gelenkbolzenlänge eines Gelenkbolzens soll insbesondere eine Länge eines Gelenkbolzens entlang der Lagerachse verstanden werden. Vorteilhaft ist eine Haupterstreckungsrichtung eines Gelenkbolzens und/oder eine Hauptlängserstreckungsrichtung eines Gelenkbolzens parallel oder weitgehend parallele zur Lagerachse ausgerichtet. Sind der erste Gelenkbolzen und der zweite Gelenkbolzen zueinander ausgerichtet, so entspricht die Summe aus dem Gelenkbolzenabstand, der ersten Gelenkbolzenlänge und der zweiten Gelenkbolzenlänge dem Abstand von der ersten Säule zur zweiten Säule.

Das Schwenklager wird weiter gegenüber unerwünschten Bewegungen, insbesondere elastischen Verformungen weiter stabilisiert, wenn eine Säulenbreite von einer der wenigstens zwei Säulen größer ist als eine Gelenkbolzenlänge des Gelenkbolzens dieser Säule. Unter einer Säulenbreite ist insbesondere eine Ausdehnung der Säule in Richtung einer Haupterstreckungsrichtung des Gelenkbolzens der Säule zu verstehen. Besonders vorteilhaft ist die Säulenbreite ein Durchmesser der Säule in Richtung der Lagerachse.

Weist die Adaptergrundfläche eine unter dem Gelenkbolzen angeordnete Bolzenöffnung auf, welche eine Öffnungslänge aufweist, welche größer ist als die Gelenkbolzenlänge, hat das den Vorteil, dass ein Wischarm besonders einfach an das Schwenklager montierbar ist. Durch die Bolzenöffnung wird die elastische Verformbarkeit der Säule nach außen in eine Richtung gegen eine Orientierung des Gelenkbolzens erhöht, so dass ein Wischarm einfach einspannbar ist.

Besonders vorteilhaft ist eine Adaptereinheit aufweisend ein Grundelement und ein Abdeckelement, wobei das Grundelement dazu eingerichtet ist, das Wischblatt aufzunehmen und das Schwenklager sowie die Adaptergrundfläche aufweist, wobei das Abdeckelement die Windabweiserfläche aufweist und mit dem Grundelement verbindbar ausgebildet ist, und wobei insbesondere das Abdeckelement mit dem Grundelement fest verbindbar ausgebildet ist, so dass das mit dem Grundelement verbundene Abdeckelement gegenüber dem Grundelement weitgehend unbeweglich ist. Auf diese Weise kann zu jedem Zeitpunkt einer Wischbewegung eine besonders günstige Aerodynamik eines Verbindungsbereichs zwischen Adaptereinheit und Wischblatt gewährleistet werden.

Vorteilhaft ist das Abdeckelement mit der Windabweiserfläche einstückig ausgebildet. Vorteilhaft weist das Abdeckelement ein Kopplungselement auf welches zur Verbindung mit dem Grundelement vorgesehen ist. Vorteilhaft ist das Abdeckelement mit dem Kopplungselement einstückig ausgebildet. Unter einem Grundelement soll insbesondere ein Adapter verstanden werden, das einen Kontaktbereich zum Wischblatt bzw. zu einem Wischblattbauteil aufweist und mit dem Wischblatt bzw. dem Wischblattbauteil verbindbar ist, vorteilhaft fest verbindbar ist, insbesondere so verbindbar, dass das Wischblatt in mit dem Grundelement verbundenen Zustand weitgehend nicht gegenüber dem Grundelement beweglich ist. Vorteilhaft weist das Grundelement ein Aufnahmeelement auf, welches dazu vorgesehen ist, mit dem Abdeckelement bzw. mit dem Kopplungselement des Abdeckelements zu koppeln. Vorteilhaft ist die Wischblattadaptereinheit mit dem Kontaktbereich und/oder mit dem Aufnahmeelement einstückig ausgebildet. Es ist auch denkbar, dass das Grundelement mit dem Wischblatt oder mit einem Wischblattbauteil einstückig ausgebildet ist. Vorteilhaft ist das Grundelement mit dem Schwenklager einstückig ausgebildet. Vorteilhaft ist die Schwenklager so ausgebildet, dass die Lagerachse senkrecht oder weitgehend senkrecht zu einer Wischarmrichtung angeordnet ist.

Besonders vorteilhaft ist eine Adaptereinheit aufweisend eine Wischarmadaptereinheit und eine Wischblattadaptereinheit, wobei die Wischblattadaptereinheit dazu eingerichtet ist, das Wischblatt aufzunehmen und das Schwenklager sowie die Adaptergrundfläche aufweist, wobei die Wischarmadaptereinheit dazu eingerichtet ist, den Wischarm aufzunehmen und die Windabweiserfläche aufweist, wobei das Schwenklager dazu eingerichtet ist, die Wischarmadaptereinheit zu lagern. Auf diese Weise kann zu jedem Zeitpunkt einer Wischbewegung eine besonders günstige Aerodynamik eines Verbindungsbereichs zwischen Adaptereinheit und Wischarm gewährleistet werden.

Vorteilhaft ist die Wischarmadaptereinheit mit der Windabweiserfläche und/oder mit dem Schwenklager einstückig ausgebildet. Vorteilhaft ist die Wischarmadaptereinheit fest mit den Wischarm verbindbar, insbesondere so, dass der Wischarm im mit der Wischarmadaptereinheit verbundenen Zustand weitgehend nicht gegenüber der Wischarmadaptereinheit beweglich ist.

Unter einer Wischblattadaptereinheit soll insbesondere ein Adapter verstanden werden, das einen Kontaktbereich zum Wischblatt bzw. zu einem Wischblattbauteil aufweist und mit dem Wischblatt bzw. dem Wischblattbauteil verbindbar ist, vorteilhaft fest verbindbar ist, insbesondere so verbindbar, dass das Wischblatt in mit der Wischblattadaptereinheit verbundenen Zustand weitgehend nicht gegenüber der Wischblattadaptereinheit beweglich ist. Vorteilhaft ist die Wischblattadaptereinheit mit dem Kontaktbereich und/oder mit dem Schwenklager einstückig ausgebildet. Es ist auch denkbar, dass die Wischblattadaptereinheit mit dem Wischblatt oder mit einem Wischblattbauteil einstückig ausgebildet ist. Vorteilhaft ist die

### Zeichnungen

In den Zeichnungen sind Ausführungsbeispiele der Adaptereinheit gemäß der vorliegenden Erfindung dargestellt und in der nachfolgenden Beschreibung näher erläutert. Es zeigen
Figur 1 eine Wischvorrichtung mit einer Adaptereinheit,
Figur 2 einen Schnitt durch die Adaptereinheit,
Figuren 3 bis 7 sowie 9 Details und Varianten eines Schwenklagers der Adaptereinheit und
Figur 8 einen Schnitt durch eine Variante der Adaptereinheit.

### Beschreibung

In den verschiedenen Ausführungsvarianten erhalten gleiche Teile die gleichen Bezugszahlen.

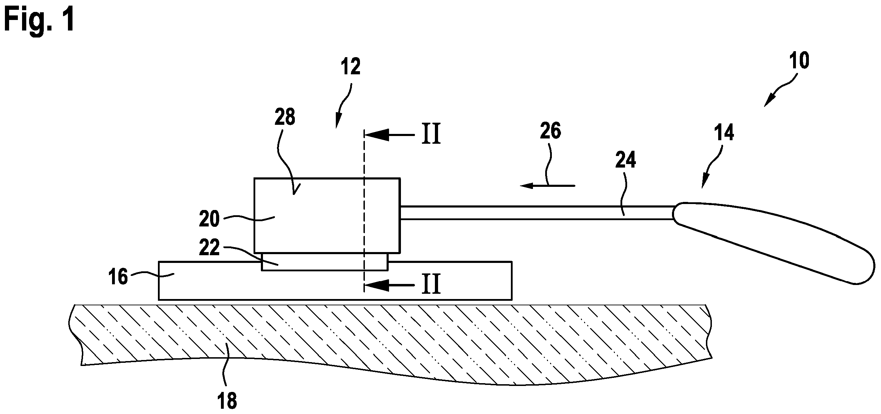

In der Figur 1 ist schematisch eine Wischvorrichtung 10 mit einer Adaptereinheit 12, einem Wischarm 14 und einem Wischblatt 16 in einer Seitenansicht gezeigt. Das Wischblatt 16 ist als Flachwischblatt ausgebildet. Das Wischblatt 16 ist zum Reinigen einer Fahrzeugscheibe 18 vorgesehen. Die Adaptereinheit 12 weist ein Abdeckelement 20 auf. Die Adaptereinheit weist ein Grundelement 22 auf. Der Wischarm 16 weist eine Wischstange 24 auf. Im Ausführungsbeispiel ist eine Hauptlängserstreckungsrichtung der Wischarmadaptereinheit parallel zu einer Wischarmrichtung 26 angeordnet. Eine Hauptlängserstreckungsrichtung des Wischblatts ist parallel zur Wischarmrichtung angeordnet. In vorteilhaften Varianten ist die Hauptlängserstreckungsrichtung der Wischarmadaptereinheit zumindest weitgehend parallel zu einer Wischarmrichtung 26 angeordnet. In vorteilhaften Varianten ist Hauptlängserstreckungsrichtung des Wischblatts ist zumindest weitgehend parallel zur Wischarmrichtung angeordnet. Das Abdeckelement weist eine Windabweiserfläche 28 auf.

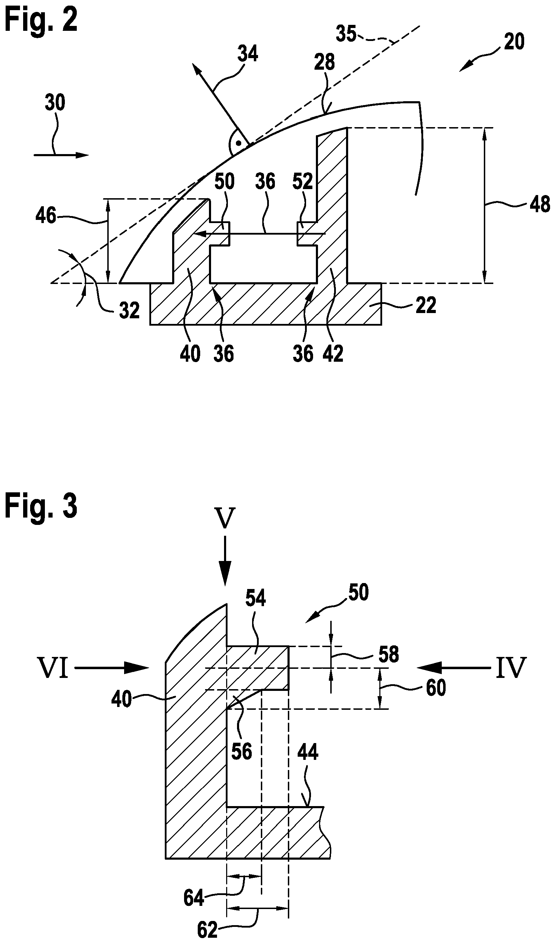

Figur 2 zeigt eine Seitenansicht auf das Abdeckelement und das Grundelement in Wischarmrichtung 26. Figur 2 ist ein entspricht Schnitt entlang der Linie II-II in Figur 1 nur ohne den Wischarm. Die Bildebene von Figur 2 ist senkrecht zur Wischarmrichtung 26 angeordnet. Die Windabweiserfläche 28 schließt mit einer Windanströmrichtung 30 einen Hauptwinkel 32 von 35° ein. Der Hauptwinkel wird zwischen der Windanströmrichtung und einer Tangentialebene eines mittleren Normalenvektors 34 der Windabweiserfläche aufgespannt. Die Tangentialebene liegt senkrecht zur Bildebene der Figur 2 bzw. parallel zur Wischarmrichtung 26 und wird in Figur 2 durch eine Schnittgrade 35 der Tangentialebene mit der Bildebene repräsentiert. Die Windabweiserfläche ist entlang der Windanströmrichtung konvex ausgebildet.

In Varianten der Adaptereinheit ist die Windabweiserfläche wenigstens bereichsweise konvex ausgebildet, insbesondere konvex entlang der Windanströmrichtung. Darunter, dass eine Fläche der Adaptereinheit konvex ausgebildet ist, soll insbesondere verstanden werden, dass die Fläche aus der Adaptereinheit herausgewölbt ist. In weiteren Varianten der Adaptereinheit ist die Windabweiserfläche wenigstens bereichsweise konkav ausgebildet, insbesondere konkav entlang der Windanströmrichtung. Darunter, dass eine Fläche der Adaptereinheit konkav ausgebildet ist, soll insbesondere verstanden werden, dass die Fläche in die die Adaptereinheit hineingewölbt ist.

Das Grundelement weist ein Schwenklager 36 auf, welches dazu eingerichtet ist, den Wischarm um eine Lagerachse 38 schwenkbar aufzunehmen. Das Schwenklager umfasst eine erste Säule 40. Die erste Säule 40 ist eine windzugewandte Säule. Die erste Säule ist senkrecht zur einer Adaptergrundfläche 44 ausgerichtet. Das Schwenklager umfasst eine zweite Säule 42. Die zweite Säule 42 ist eine windabgewandte Säule. Die zweite Säule ist senkrecht zur Adaptergrundfläche 44 ausgerichtet.

Die erste Säule weist eine erste Höhe 46 von 6 mm auf. Die zweite Säule weist eine zweite Höhe 48 von 10 mm auf. Die erste Höhe 46 ist kleiner als die zweite Höhe. In Varianten liegt die erste Höhe zwischen 2 mm und 10 mm, bevorzugt zwischen 4 mm und 8 mm. In Varianten liegt die zweite Höhe zwischen 6 mm und 14 mm, bevorzugt zwischen 8 mm und 12 mm. Bevorzugt ist die erste Höhe kleiner als die zweite Höhe. Die Wahl der Werte für die erste Höhe und die zweite Höhe richtet sich nach den technischen Anforderungen an die Adaptereinheit, insbesondere nach einem vorgegebenen Hauptwinkel 32.

Die erste Säule weist einen ersten Gelenkbolzen 50 auf. Die zweite Säule weist einen zweiten Gelenkbolzen 52 auf. Der erste Gelenkbolzen und der zweite Gelenkbolzen sind zueinander ausgerichtet. Der erste Gelenkbolzen ist parallel zur Lagerachse 38 angeordnet. Der zweite Gelenkbolzen ist parallel zur Lagerachse 38 angeordnet.

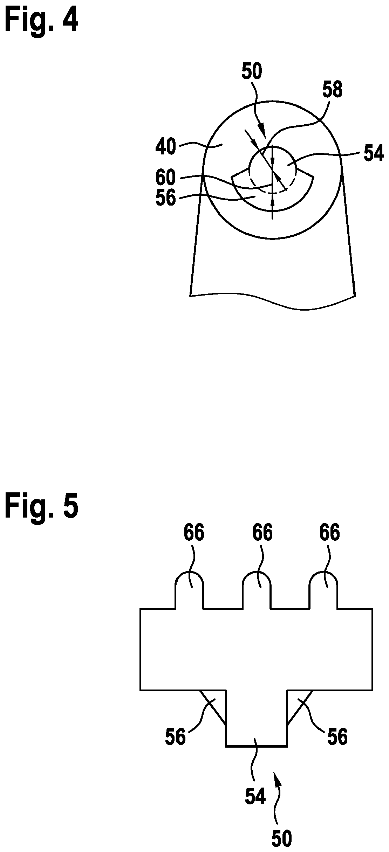

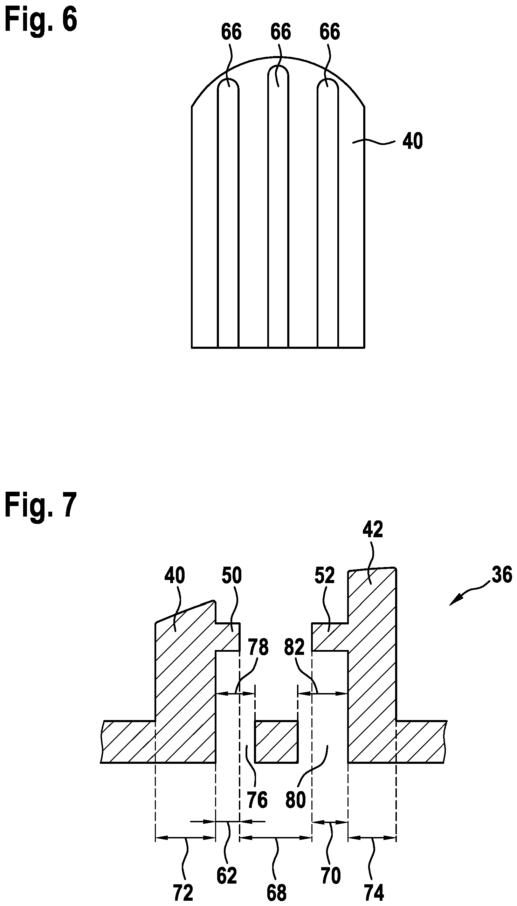

Figur 3 zeigt eine Detailansicht einer ersten Säule 40 von einer alternativen Variante der Adaptereinheit. Figur 4 zeigt eine Ansicht der ersten Säule 40 in Richtung von Pfeil IV in Figur 3. Pfeil IV ist parallel zur Lagerachse angeordnet. Der erste Gelenkbolzen 50 setzt sich einstückig aus einem ersten Zylinder 54 und aus einem halben Hohlkegelstumpfsegment 56 zusammen. Das halbe Hohlkegelstumpfsegment 56 ist an einer der Adaptergrundfläche 44 zugewandten Bolzenunterseite angeordnet. Das halbe Hohlkegelstumpfsegment 56 ist mit einem breiteren Ende an der ersten Säule 40 angeordnet. Der erste Gelenkbolzen hat einen ersten Bolzenradius 58 von 2 mm. Der erste Bolzenradius ist ein Radius des ersten Zylinders 54. Der erste Gelenkbolzen hat auf einer von der Adaptergrundfläche abgewandten Bolzenoberseite den ersten Bolzenradius. Aufgrund des halben Hohlkegelstumpfsegments 56 hat der erste Bolzen an der Bolzenunterseite an der ersten Säule einen zweiten Bolzenradius 60 von 3 mm. Der erste Zylinder bzw. der erste Gelenkbolzen haben eine erste Gelenkbolzenlänge 62 von 4 mm. Das halbe Hohlkegelstumpfsegment 56 hat eine Hohlkegelstumpfsegmentlänge 64 von 1 mm. Es sind auch andere Abmessungen des ersten Gelenkbolzens denkbar, diese richten sich nach den technischen Anforderungen. Insbesondere kann die erste Gelenkbolzenlänge zwischen 1 mm und 6 mm liegen, bevorzugt zwischen 2 mm und 5 mm, besonders bevorzugt zwischen 3 mm und 4 mm. Ein erster Bolzenradius kann zwischen 1 mm und 6 mm liegen, bevorzugt zwischen 2 mm und 5 mm, besonders bevorzugt zwischen 3 mm und 4 mm. Figur 5 zeigt eine Ansicht von oben auf die erste Säule in Richtung von Pfeil V in Figur 3. Pfeil V ist senkrecht zur Adaptergrundfläche angeordnet. Figur 6 zeigt eine Ansicht der ersten Säule aus der Richtung von Pfeil VI in Figur 3. Pfeil VI ist parallel zur Lagerachse ausgerichtet. Die erste Säule weist drei Rippen 66 auf. Die Rippen sind jeweils senkrecht zur Adaptergrundfläche angeordnet. Die Rippen 66 sind einstückig mit der ersten Säule ausgebildet.

Figur 7 zeigt das Schwenklager 36 von einer alternativen Variante der Adaptereinheit. Der erste Gelenkbolzen und der zweite Gelenkbolzen haben einen Gelenkbolzenabstand 68 von 6 mm. Der erste Gelenkbolzen hat eine erste Gelenkbolzenlänge 62 von 2 mm. Der zweite Gelenkbolzen hat eine zweite Gelenkbolzenlänge 70 von 3 mm. Die Summe aus der ersten Gelenkbolzenlänge und der zweiten Gelenkbolzenlänge ist geringer als der Gelenkbolzenabstand.

Eine erste Säulenbreite 72 der ersten Säule 40 beträgt 5 mm. Die erste Säulenbreite 72 ist größer als die erste Gelenkbolzenlänge 62. Die erste Säulenbreite 72 ist parallel zur Lagerachse angeordnet. Eine zweite Säulenbreite 74 der zweiten Säule 42 beträgt 4 mm. Die zweite Säulenbreite 74 ist größer als die erste Gelenkbolzenlänge 70. Die zweite Säulenbreite 74 ist parallel zur Lagerachse angeordnet.

Die Adaptergrundfläche 44 weist unterhalb des ersten Gelenkbolzens eine erste Bolzenöffnung 76 auf. Die erste Bolzenöffnung weist eine erste Öffnungslänge 78 von 3.5 mm auf. Die erste Öffnungslänge ist größer als die erste Gelenkbolzenlänge. Die erste Öffnungslänge ist parallel zur Lagerachse ausgerichtet.

Die Adaptergrundfläche 44 weist unterhalb des zweiten Gelenkbolzens eine zweite Bolzenöffnung 80 auf. Die zweite Bolzenöffnung weist eine zweite Öffnungslänge 82 von 3.5 mm auf. Die zweite Öffnungslänge ist größer als die zweite Gelenkbolzenlänge. Die zweite Öffnungslänge ist parallel zur Lagerachse ausgerichtet.

Bevorzugt weist die eine Bolzenöffnung eine parallel zur Adaptergrundfläche und senkrecht zur Lagerachse angeordnete Öffnungsbreite auf, welche größer ist als ein größter Bolzenradius des darüber angeordneten Gelenkbolzens. Bevorzug ist die Bolzenöffnung so dimensioniert, dass eine senkrechte Projektion des Gelenkbolzens auf die Adaptergrundfläche vollständig innerhalb der Bolzenöffnung liegt.

Im Ausführungsbeispiel ist das Abdeckelement 20 über eine nicht gezeigte Rastverbindung mit dem Grundelement 22 fest verbindbar. Das mit dem Grundelement verbundene Abdeckelement ist weitgehend unbeweglich gegenüber dem Grundelement. Das Grundelement 22 weist das Schwenklager 36 auf. Das Abdeckelement überdeckt das Schwenklager. Das Schwenklager ist dazu eingerichtet, an den Wischarm zu koppeln, so dass der Wischarm um die Lagerachse 38 (siehe Figur 2) schwenkbar bzw. drehbar ist. Die Lagerachse 38 ist im Ausführungsbeispiel parallel zur Windanströmrichtung 30 ausgerichtet. Das Grundelement 22 ist dazu eingerichtet, das Wischblatt 16 über eine nicht gezeigte Steckverbindung aufzunehmen.

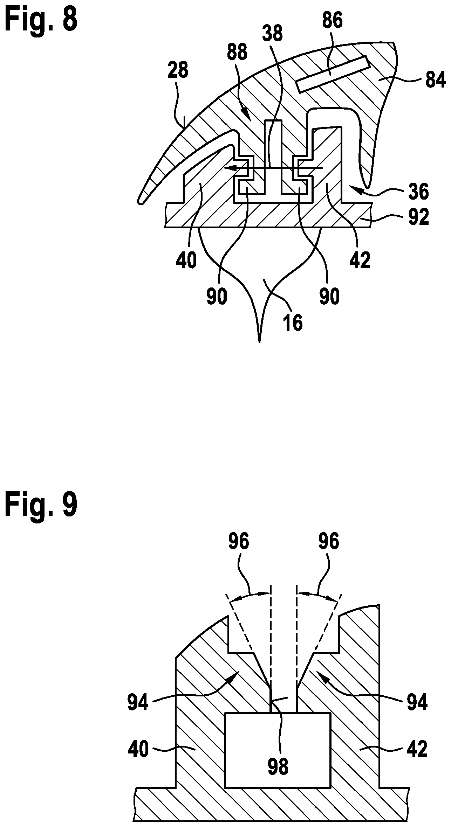

Figur 8 zeigt einen Schnitt durch eine alternative Ausführungsform der Adaptereinheit senkrecht zur Wischarmrichtung 26. Die Adaptereinheit 12 weist eine Wischarmadaptereinheit 84 auf. Die Wischarmadaptereinheit weist die Windabweiserfläche 28 auf. Die Wischarmadaptereinheit weist eine Wischarmöffnung 86 auf, welche dazu eingerichtet ist, den Wischarm aufzunehmen. Die Wischarmöffnung ist eine Öffnung für einen Aufnahmekanal, in den der Wischarm einführbar ist. Der Aufnahmekanal verläuft weitgehend parallel zur Wischarmrichtung. Die Wischarmadaptereinheit weist im Ausführungsbeispiel ein nicht gezeigtes Fixiermittel auf, welches zu einer lösbaren Kopplung des Wischarms mit der Wischarmadaptereinheit vorgesehen ist. Im gekoppelten Zustand ist der Wischarm fest mit der Wischarmadaptereinheit verbunden. Im mit der Wischarmadaptereinheit verbundenen Zustand ist der Wischarm gegenüber der Wischarmadaptereinheit weitgehend unbeweglich. Die Wischarmadaptereinheit 84 weist eine Verbindungslement 88 auf, welche dazu vorgesehen ist, mit einer Wischblattadaptereinheit 90 um die Lagerachse 38 schwenkbar zu koppeln. Die Wischblattadaptereinheit 90 ist dazu eingerichtet vorgesehen, das Wischblatt 16 aufzunehmen. Die Wischblattadaptereinheit 90 weist das Schwenklager 36 auf. Das Schwenklager umfasst die erste Säule 40 und die zweite Säule 42. Das Verbindungselement weist zwei zueinander parallel angeordnete Platten 92 auf. Die Platten 92 weisen zueinander einen Abstand auf, der um eine halbe Gelenkbolzenlänge von einem Gelenkbolzen - dem kürzeren der beiden Gelenkbolzen - kürzer ist als der Abstand von der ersten Säule zur zweiten Säule. Auf diese Weise passen die Platten zwischen die beiden Säulen. Die Platten weisen jeweils eine weitgehend runde Öffnung auf, welche dazu ausgebildet, den Gelenkbolzen aufzunehmen. Die Platten 92 sind elastisch ausgebildet und zueinander elastisch auslenkbar. Auf diese Weise ist es möglich, das Verbindungselement in das Schwenklager einzurasten. Beim Montieren der Wischarmadaptereinheit auf die Wischblattadaptereinheit werden die Platten in einen Innenbereich zwischen den Säulen eingeführt und elastisch zueinander bewegt. Beim Einführen nehmen die Öffnungen der Platten jeweils einen Gelenkbolzen auf und die Platten werden elastisch zueinander parallel ausgerichtet.

Figur 9 zeigt eine vorteilhafte Variante des Schwenklagers. Die Gelenkbolzen weisen jeweils auf ihrer Oberseite eine Abschrägung 94 auf. Die Abschrägungen schließen mit einer Normalen der Adaptergrundfläche einen Schrägenwinkel von 20°. In Varianten beträgt der Schrägenwinkel zwischen 5° und 45°, bevorzugt zwischen 15° und 35°, besonders bevorzugt zwischen 25° und 30°. In weiteren Varianten ist eine äußere Außenfläche 98 des Gelenkbolzens wenigstens bereichsweise wenigstens eine Abschrägung auf. In bevorzugten Varianten nimmt die Gelenkbolzenlänge mit zunehmenden Abstand von der Adaptergrundfläche zumindest abschnittsweise ab.

In vorteilhaften Ausführungsformen weist die Windabweiserfläche 28 eine veränderte bzw. besondere Oberflächenstruktur auf. Die Oberfläche kann wenigstens bereichsweise aufgeraut sein und/oder eine Haifischhautstruktur aufweisen und/oder eine Golfballstruktur aufweisen. Eine solche Oberflächenstruktur beeinflusst den über sie strömenden Luftstrom. Auf diese Weise lassen sich die aerodynamischen Eigenschaften der Windabweiserfläche verbessern. Insbesondere ist es möglich, über die Windabweiserfläche wirkende Anpresskräfte durch eine Auswahl der Art und Anordnung der veränderten Oberflächenstruktur präzise einzustellen.

## Patentansprüche

1. Adaptereinheit (12), die zu einer Kopplung, insbesondere lösbaren Kopplung eines Wischblatts (16) mit einem Wischarm (14) vorgesehen ist, aufweisend eine Windabweiserfläche (28), welche dazu eingerichtet ist, eine anströmende Luft abzuweisen und das Wischblatt (16) an eine Fahrzeugscheibe zu drücken, und aufweisend ein Schwenklager (36), welches dazu eingerichtet ist, den Wischarm (14) gegenüber dem Wischblatt (16) schwenkbar zu lagern, wobei das Schwenklager (36) wenigstens zwei weitgehend vertikal auf einer Adaptergrundfläche (50, 52) angeordnete Säulen (40, 42) aufweist, wobei jede der Säulen (40, 42) jeweils einen Gelenkbolzen (50, 52) aufweist, welcher parallel oder weitgehend parallel zu einer Lagerachse (38) ausgerichtet ist und zur Lagerung des Wischarms (14) und/oder einer Wischarmadaptereinheit (84) vorgesehen ist, wobei eine windzugewandte Säule (40) der wenigstens zwei Säulen (40, 42) eine geringere Höhe hat als eine windabgewandte Säule (42) der wenigstens zwei Säulen (40, 42), insbesondere, dass eine Höhe der wenigstens zwei Säulen (40, 42) einem Höhenverlauf der Windabweiserfläche (28) entspricht, **dadurch gekennzeichnet, dass** die Gelenkbolzen (50, 52) auf einer der Adaptergrundfläche (44) zugewandten Bolzenunterseite einen größeren Bolzenradius (58, 60) aufweisen als an einer von der Adaptergrundfläche (44) abgewandten Bolzenoberseite.

2. Adaptereinheit (12) nach Anspruch 1, **dadurch gekennzeichnet, dass** die Windabweiserfläche (28) einen Hauptwinkel zwischen 25° und 65°, bevorzugt zwischen 40° und 50° mit der Lagerachse (38) einschließt.

3. Adaptereinheit (12) nach einem der vorhergehenden Ansprüche, **dadurch gekennzeichnet, dass** die wenigstens zwei Säulen (40, 42) eine Vielzahl Rippen (66) aufweisen, welche zur Verfestigung der Säulen (40, 42) vorgesehen sind, wobei die Rippen (66) bevorzugt auf einer dem Gelenkbolzen (50, 52) gegenüberliegenden Seite einer Säule (40, 42) angeordnet sind.

4. Adaptereinheit (12) nach einem der vorhergehenden Ansprüche, **dadurch gekennzeichnet, dass** die Gelenkbolzen (50, 52) der wenigstens zwei Säulen (40, 42) zueinander ausgerichtet sind.

5. Adaptereinheit (12) nach einem der vorhergehenden Ansprüche, **dadurch gekennzeichnet, dass** ein Gelenkbolzenabstand (68) von einem ersten Gelenkbolzen (50) zu einem zweiten Gelenkbolzen (52) größer ist als eine Summe von einer ersten Gelenkbolzenlänge (62) des ersten Gelenkbolzens (50) und einer zweiten Gelenkbolzenlänge (70) des zweiten Gelenkbolzens (52).

6. Adaptereinheit (12) nach einem der vorhergehenden Ansprüche, **dadurch gekennzeichnet, dass** eine Säulenbreite von einer der wenigstens zwei Säulen (40, 42) größer ist als eine Gelenkbolzenlänge (62, 70) des Gelenkbolzens (50, 52) dieser Säule (40, 42).

7. Adaptereinheit (12) nach einem der vorhergehenden Ansprüche, **dadurch gekennzeichnet, dass** die Adaptergrundfläche (44) eine unter dem Gelenkbolzen (50, 52) angeordnete Bolzenöffnung (76) aufweist, welche eine Öffnungslänge (78) aufweist, welche größer ist als die Gelenkbolzenlänge (62).

8. Adaptereinheit (12) nach einem der vorhergehenden Ansprüche, **gekennzeichnet durch** ein Grundelement (22) und ein Abdeckelement (20), wobei das Grundelement (22) dazu eingerichtet ist, das Wischblatt (16) aufzunehmen und das Schwenklager (36) sowie die Adaptergrundfläche (44) aufweist, wobei das Abdeckelement (20) die Windabweiserfläche (28) aufweist und mit dem Grundelement (22) verbindbar ausgebildet ist, und wobei insbesondere das Abdeckelement (20) mit dem Grundelement (22) fest verbindbar ausgebildet ist, so dass das mit dem Grundelement (22) verbundene Abdeckelement (20) gegenüber dem Grundelement (22) weitgehend unbeweglich ist.

9. Adaptereinheit (12) nach einem der vorhergehenden Ansprüche, **gekennzeichnet durch** eine Wischarmadaptereinheit (84) und eine Wischblattadaptereinheit (90), wobei die Wischblattadaptereinheit (90) dazu eingerichtet ist, das Wischblatt (16) aufzunehmen und das Schwenklager (36) sowie die Adaptergrundfläche (44) aufweist, wobei die Wischarmadaptereinheit (84) dazu eingerichtet ist, den Wischarm (14) aufzunehmen und die Windabweiserfläche (28) aufweist, wobei das Schwenklager (36) dazu eingerichtet ist, die Wischarmadaptereinheit (84) zu lagern.

## Claims

1. Adapter unit (12) provided for coupling, in particular releasable coupling, of a wiper blade (16) to a wiper arm (14), having a wind deflector surface (28) which is configured to deflect an incident flow of air and to press the wiper blade (16) against a vehicle window, and having a pivot bearing (36) which is configured to mount the wiper arm (14) pivotably relative to the wiper blade (16), wherein the pivot bearing (36) has at least two columns (40, 42) arranged largely vertically on an adapter base surface (50, 52), wherein each of the columns (40, 42) has a respective hinge pin (50, 52) which is oriented parallel or largely parallel to a bearing axis (38) and is provided for mounting the wiper arm (14) and/or a wiper arm adapter unit (84), wherein a column (40) of the at least two columns (40, 42) that faces the wind has a lower height than a column (42) of the at least two columns (40, 42) that faces away from the wind, in particular wherein a height of the at least two columns (40, 42) corresponds to a height profile of the wind deflector surface (28), **characterized in that** the hinge pins (50, 52) have a larger pin radius (58, 60) on a pin underside facing the adapter base surface (44) than on a pin upper side facing away from the adapter base surface (44).

2. Adapter unit (12) according to Claim 1, **characterized in that** the wind deflector surface (28) encloses a main angle of between 25° and 65°, preferably of between 40° and 50°, with the bearing axis (38).

3. Adapter unit (12) according to either of the preceding claims, **characterized in that** the at least two columns (40, 42) have a plurality of ribs (66) which are provided for strengthening the columns (40, 42), the ribs (66) preferably being arranged on a side of a column (40, 42) opposite the hinge pin (50, 52).

4. Adapter unit (12) according to one of the preceding claims, **characterized in that** the hinge pins (50, 52) of the at least two columns (40, 42) are aligned with each other.

5. Adapter unit (12) according to one of the preceding claims, **characterized in that** a hinge pin distance (68) from a first hinge pin (50) to a second hinge pin (52) is greater than a sum of a first hinge pin length (62) of the first hinge pin (50) and a second hinge pin length (70) of the second hinge pin (52).

6. Adapter unit (12) according to one of the preceding claims, **characterized in that** a column width of one of the at least two columns (40, 42) is greater than a hinge pin length (62, 70) of the hinge pin (50, 52) of this column (40, 42).

7. Adapter unit (12) according to one of the preceding claims, **characterized in that** the adapter base surface (44) has a pin opening (76) which is arranged under the hinge pin (50, 52) and which has an opening length (78) greater than the hinge pin length (62).

8. Adapter unit (12) according to one of the preceding claims, **characterized by** a base element (22) and a cover element (20), wherein the base element (22) is configured to receive the wiper blade (16) and has the pivot bearing (36) and the adapter base surface (44), wherein the cover element (20) has the wind deflector surface (28) and is designed to be connectable to the base element (22), and wherein in particular the cover element (20) is designed to be firmly connectable to the base element (22), such that the cover element (20) connected to the base element (22) is largely immovable relative to the base element (22) .

9. Adapter unit (12) according to one of the preceding claims, **characterized by** a wiper arm adapter unit (84) and a wiper blade adapter unit (90), wherein the wiper blade adapter unit (90) is configured to receive the wiper blade (16) and has the pivot bearing (36) and the adapter base surface (44), wherein the wiper arm adapter unit (84) is configured to receive the wiper arm (14) and has the wind deflector surface (28), and wherein the pivot bearing (36) is configured to mount the wiper arm adapter unit (84).

## Revendications

1. Unité d'adaptateur (12) prévue pour un couplage, notamment un couplage amovible d'un balai d'essuie-glace (16) avec un bras d'essuie-glace (14), présentant une surface de déflecteur de vent (28) qui est adaptée pour repousser un air affluant et pour presser le balai d'essuie-glace (16) contre une vitre de véhicule, et présentant un palier de pivotement (36), qui est adapté pour supporter le bras d'essuie-glace (14) de manière pivotante par rapport au balai d'essuie-glace (16), le palier de pivotement (36) présentant au moins deux colonnes (40, 42) agencées largement verticalement sur une surface de base d'adaptateur (50, 52), chacune des colonnes (40, 42) présentant respectivement une goupille d'articulation (50, 52), qui est orientée parallèlement ou largement parallèlement à un axe de palier (38) et est prévue pour supporter le bras d'essuie-glace (14) et/ou une unité d'adaptateur de bras d'essuie-glace (84), une colonne (40) tournée vers le vent parmi les au moins deux colonnes (40, 42) ayant une hauteur inférieure à celle d'une colonne (42) détournée du vent parmi les au moins deux colonnes (40, 42), notamment une hauteur des au moins deux colonnes (40, 42) correspondant à une allure de hauteur de la surface de déflecteur de vent (28), **caractérisée en ce que** les goupilles d'articulation (50, 52) présentent un plus grand rayon de goupille (58, 60) sur un côté inférieur de goupille tourné vers la surface de base d'adaptateur (44) que sur un côté supérieur de goupille détourné de la surface de base d'adaptateur (44) .

2. Unité d'adaptateur (12) selon la revendication 1, **caractérisée en ce que** la surface de déflecteur de vent (28) forme un angle principal compris entre 25° et 65°, de préférence entre 40° et 50° avec l'axe de palier (38).

3. Unité d'adaptateur (12) selon l'une quelconque des revendications précédentes, **caractérisée en ce que** les au moins deux colonnes (40, 42) présentent une pluralité de nervures (66) prévues pour solidifier les colonnes (40, 42), les nervures (66) étant de préférence agencées sur un côté d'une colonne (40, 42) opposé à la goupille d'articulation (50, 52).

4. Unité d'adaptateur (12) selon l'une quelconque des revendications précédentes, **caractérisée en ce que** les goupilles d'articulation (50, 52) des au moins deux colonnes (40, 42) sont alignées l'une par rapport à l'autre.

5. Unité d'adaptateur (12) selon l'une quelconque des revendications précédentes, **caractérisée en ce qu'**une distance de goupille d'articulation (68) d'une première goupille d'articulation (50) à une deuxième goupille d'articulation (52) est supérieure à une somme d'une première longueur de goupille d'articulation (62) de la première goupille d'articulation (50) et d'une deuxième longueur de goupille d'articulation (70) de la deuxième goupille d'articulation (52).

6. Unité d'adaptateur (12) selon l'une quelconque des revendications précédentes, **caractérisée en ce qu'**une largeur de colonne de l'une des au moins deux colonnes (40, 42) est supérieure à une longueur de goupille d'articulation (62, 70) de la goupille d'articulation (50, 52) de cette colonne (40, 42).

7. Unité d'adaptateur (12) selon l'une quelconque des revendications précédentes, **caractérisée en ce que** la surface de base d'adaptateur (44) présente une ouverture de goupille (76) agencée sous la goupille d'articulation (50, 52), laquelle présente une longueur d'ouverture (78) qui est supérieure à la longueur de goupille d'articulation (62).

8. Unité d'adaptateur (12) selon l'une quelconque des revendications précédentes, **caractérisée par** un élément de base (22) et un élément de recouvrement (20), l'élément de base (22) étant adapté pour recevoir le balai d'essuie-glace (16) et présentant le palier de pivotement (36) ainsi que la surface de base d'adaptateur (44), l'élément de recouvrement (20) présentant la surface de déflecteur de vent (28) et étant réalisé de manière à pouvoir être relié à l'élément de base (22), et l'élément de recouvrement (20) étant notamment réalisé de manière à pouvoir être relié fixement à l'élément de base (22), de telle sorte que l'élément de recouvrement (20) relié à l'élément de base (22) est largement immobile par rapport à l'élément de base (22).

9. Unité d'adaptateur (12) selon l'une quelconque des revendications précédentes, **caractérisée par** une unité d'adaptateur de bras d'essuie-glace (84) et une unité d'adaptateur de balai d'essuie-glace (90), l'unité d'adaptateur de balai d'essuie-glace (90) étant adaptée pour recevoir le balai d'essuie-glace (16) et présentant le palier de pivotement (36) ainsi que la surface de base d'adaptateur (44), l'unité d'adaptateur de bras d'essuieglace (84) étant adaptée pour recevoir le bras d'essuieglace (14) et présentant la surface de déflecteur de vent (28), le palier de pivotement (36) étant adapté pour supporter l'unité d'adaptateur de bras d'essuie-glace (84) .
